# EUROPEAN PATENT APPLICATION

(11) **EP 4 145 241 A1**
(43) Date of publication of application: **08.03.2023**
(21) Application number: 22190850.2
(22) Date of filing: 17.08.2022
(51) Int. Cl.: G05D 1/02, A01B 1/00, A01B 69/00

(54) **AUTOMATIC TRAVELING METHOD, AUTOMATIC TRAVELING SYSTEM, AND AUTOMATIC TRAVELING PROGRAM**

(30) Priority: 02.09.2021 JP 2021143121
(71) Applicant: Yanmar Holdings Co., Ltd., Osaka-shi, Osaka 530-8311 (JP)
(72) Inventor: NISHIBEPPU, Shinya, Okayama (JP); KURODA, Akifumi, Okayama (JP)
(74) Representative: Novagraaf International SA

(57) **Abstract**

[Problem] To provide an automatic traveling method, an automatic traveling system, and an automatic traveling program capable of improving a work efficiency in a work vehicle equipped with a work instrument.

[Solution] A route generating processor 214 generates a target route R that includes a plurality of straight routes Rl, along each of which a work vehicle 10 is caused to automatically travel from a start position to an end position. A receiving processor 215 receives a first setting operation to set the work vehicle 10, after reaching an end position of a first straight route Rl, to travel rearward toward a start position of the first straight route Rl, or a second setting operation to set the work vehicle 10, after reaching the end position of the first straight route Rl, to make a turn traveling, in a front, up to a second straight route Rl.

## Description

### TECHNICAL FIELD

The present invention relates to an automatic traveling method, an automatic traveling system, and an automatic traveling program for causing a work vehicle to travel.

### BACKGROUND ART

Conventional work vehicles are known to automatically travel according to a target route set for a field. For example, Patent Document 1 discloses a technology where a work vehicle that generates a target route including a plurality of parallel straight routes arranged at a regular interval which corresponds to a work width and a plurality of turn routes connecting the adjacent straight routes, and that is equipped with a work instrument is caused to automatically travel along the target route while performing a predetermined work.

### PRIOR ART DOCUMENT

### PATENT DOCUMENT

Patent Document 1: Japanese Unexamined Patent Application Publication No. 2021-040496

### SUMMARY OF INVENTION

### TECHNICAL PROBLEM

When the work vehicle is equipped with a large work instrument, a work instrument for harvesting with an assistant worker on board, or the like, the overall size of the work vehicle (overall length, width, etc.) increases, making it difficult to cause the work vehicle to make a turn traveling. Therefore, in the conventional technology where the work vehicle is caused to automatically travel along a straight route and a turn route according to a pre-generated target route, it becomes difficult to efficiently travel along the target route, especially for the work vehicle equipped with the work instrument that enlarges the overall size of the work vehicle, resulting in a problem of reduced work efficiency.

An object of the present invention is to provide an automatic traveling method, an automatic traveling system, and an automatic traveling program capable of improving a work efficiency in a work vehicle equipped with a work instrument.

### SOLUTION TO PROBLEM

An automatic traveling method according to the present invention executes operations including: generating a target route that includes a plurality of straight routes, along each of which a work vehicle is caused to automatically travel from a start position to an end position; and receiving either a first setting operation to set the work vehicle, after reaching an end position of a first straight route, to travel rearward toward a start position of the first straight route, or a second setting operation to set the work vehicle, after reaching the end position of the first straight route, to make a turn traveling, in a front, up to a second straight route.

An automatic traveling method according to the present invention executes operations including: generating a target route that includes a plurality of straight routes, along each of which a work vehicle is caused to automatically travel from a start position to an end position; and receiving either a first setting operation to set the work vehicle, after reaching an end position of a first straight route, to automatically travel rearward up to a start position of the first straight route, or a second setting operation to set the work vehicle, after reaching the end position of the first straight route, to make a turn traveling, in a front, up to a second straight route based on a manual operation by a user.

An automatic traveling system according to the present invention includes: a generating processor; and a receiving processor. The generating processor generates a target route that includes a plurality of straight routes, along each of which a work vehicle is caused to automatically travel from a start position to an end position. The receiving processor is capable of receiving a first setting operation to set the work vehicle, after reaching an end position of a first straight route, to travel rearward toward a start position of the first straight route, or a second setting operation to set the work vehicle, after reaching the end position of the first straight route, to make a turn traveling, in a front, up to a second straight route.

An automatic traveling program according to the present invention causes one processor or a plurality of processors to execute operations including: generating a target route that includes a plurality of straight routes, along each of which a work vehicle is caused to automatically travel from a start position to an end position; and receiving either a first setting operation to set the work vehicle, after reaching an end position of a first straight route, to travel rearward toward a start position of the first straight route, or a second setting operation to set the work vehicle, after reaching the end position of the first straight route, to make a turn traveling, in a front, up to a second straight route.

### ADVANTAGEOUS EFFECTS OF INVENTION

The present invention can provide an automatic traveling method, an automatic traveling system, and an automatic traveling program capable of improving a work efficiency in a work vehicle equipped with a work instrument.

### BRIEF DESCRIPTION OF DRAWINGS

FIG. 1 is a block diagram illustrating a configuration of a work vehicle according to an embodiment of the present invention.
FIG. 2 is an appearance view illustrating an example of the work vehicle according to the embodiment of the present invention.
FIG. 3 is a diagram illustrating an example of a target route of the work vehicle according to the embodiment of the present invention.
FIG. 4A is a diagram illustrating an example of a turning method of a work vehicle according to the embodiment of the present invention.
FIG. 4B is a diagram illustrating an example of the turning method of the work vehicle according to the embodiment of the present invention.
FIG. 4C is a diagram illustrating an example of the turning method of the work vehicle according to the embodiment of the present invention.
FIG. 5 is a diagram illustrating an example of an operation screen (menu screen) displayed on an operation terminal according to the embodiment of the present invention.
FIG. 6 is a diagram illustrating an example of the operation screen (turning method setting screen) displayed on the operation terminal according to the embodiment of the present invention.
FIG. 7 is a flowchart illustrating an example of a procedure of an automatic traveling process executed in the work vehicle according to the embodiment of the present invention.
FIG. 8 is a diagram illustrating another example of the operation screen (turning method setting screen) displayed on the operation terminal according to the embodiment of the present invention.
FIG. 9 is a diagram illustrating the other example of the target route of the work vehicle according to the embodiment of the present invention.
FIG. 10 is a diagram illustrating an example of the operation screen (traveling mode selection screen) displayed on the operation terminal according to the embodiment of the present invention.
FIG. 11A is a diagram illustrating an example of a correcting method of the target route according to the embodiment of the present invention.
FIG. 11B is a diagram illustrating an example of the correcting method of the target route according to the embodiment of the present invention.

### DESCRIPTION OF EMBODIMENTS

The following embodiments are embodied examples of the present invention and are not intended to limit the technical scope of the present invention.

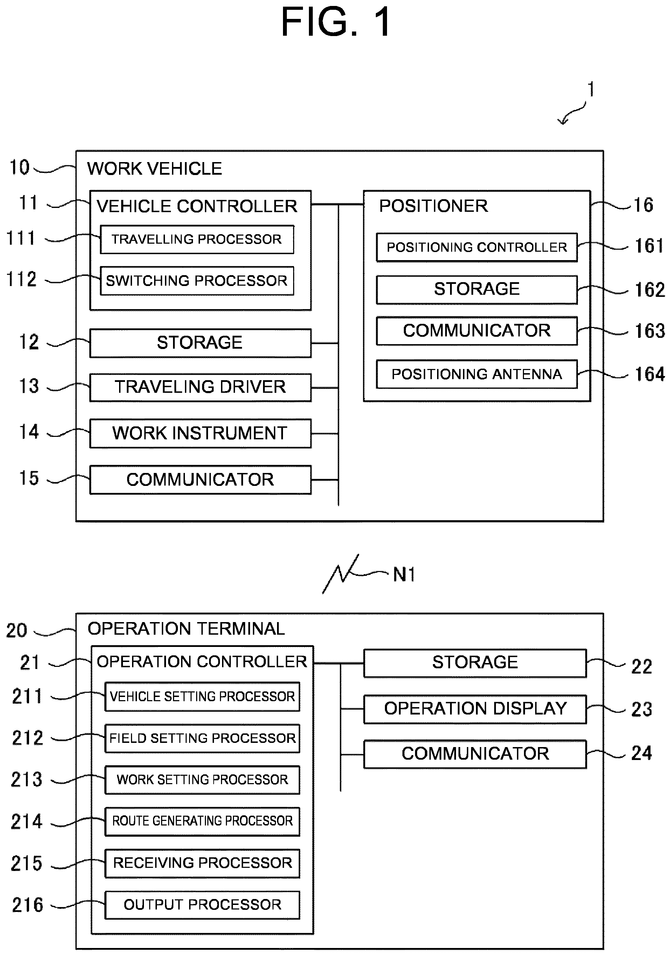

As illustrated in FIG. 1, an automatic traveling system 1 according to an embodiment of the present invention includes a work vehicle 10, and an operation terminal 20. The work vehicle 10 and the operation terminal 20 can communicate via a communication network N1. For example, the work vehicle 10 and the operation terminal 20 can communicate with each other via a cellular telephone line network, a packet line network, or a wireless LAN. The automatic traveling system 1 is a system that causes the work vehicle 10 to automatically travel in a field F.

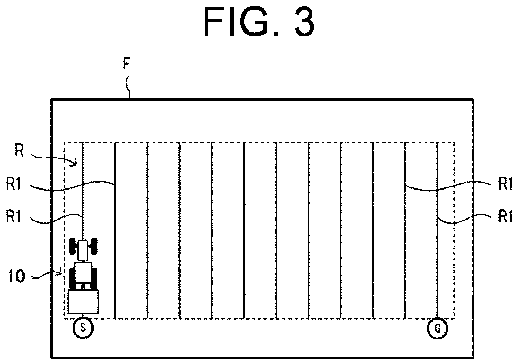

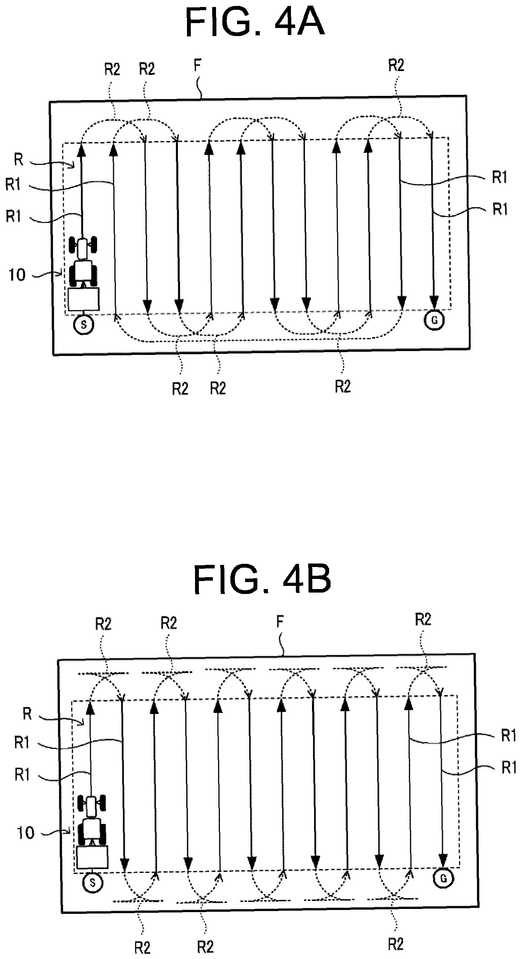

In the present embodiment, a case in which the work vehicle 10 is a tractor will be described as an example. As another embodiment, the work vehicle 10 may be a rice transplanter, a combine harvester, a construction machine, a snowplow or the like. The work vehicle 10 is a so-called robot tractor equipped with a configuration that can automatically travel (autonomously travel) in the field F (see FIG. 3) according to a predetermined target route R. Also, the work vehicle 10 is equipped with a work instrument 14 that performs a predetermined work. Specifically, while automatically traveling along a plurality of straight routes R1 included in the target route R from a work start position S to a work end position G in a field F, the work vehicle 10 causes the work instrument 14 to execute the predetermined work. The work vehicle 10 makes a turn traveling from one straight route R1 to the next straight route R1 based on a human operator's manual operation (manual traveling). That is, the work vehicle 10 travels in the field F and performs the work, while repeating the automatic traveling along the straight route R1 and the manual traveling along the turn route R2 (see FIG. 4A to FIG. 4C). Note that the target route R is a route along which the work vehicle 10 travels automatically, and is generated in advance on the basis of the human operator's registration operation. In the present embodiment, each straight route R1 corresponds to the target route R.

FIG. 3 shows an example of the target route R preset for the field F. The target route R includes a plurality of parallel straight routes R1. Each straight route R1 is a straight route connecting a work start position where the work by the work vehicle 10 is started (entry position) and a work end position where the work by the work vehicle 10 ends (exit position). Also, the target route R includes the work start position S to start the work in the field F and the work end position G to end the work. The work vehicle 10 obtains the target route R's data generated at the operation terminal 20 and automatically travels along each straight route R1 in accordance with the target route R.

FIG. 4A through FIG. 4C each show an example of the turn route R2 that connects straight routes R1 in the field F. In the examples shown in FIG. 4A and FIG. 4B, the work vehicle 10, after reaching the end position of the straight route R1, makes the turn traveling, in the front, up to the next straight route R1, based on the manual operation by the human operator. In the example shown in FIG. 4A, the work vehicle 10 skips the adjacent straight route R1 and travels along the turn route R2 toward the next straight route R1. In the example shown in FIG. 4B, the work vehicle 10 travels along the turn route R2 toward the adjacent straight route R1. Therefore, the turn route R2 shown in FIG. 4B includes a route for the work vehicle 10 to make the turn traveling forward followed by making a straight traveling (rearward traveling), forming a so-called fishtail-shaped direction change route.

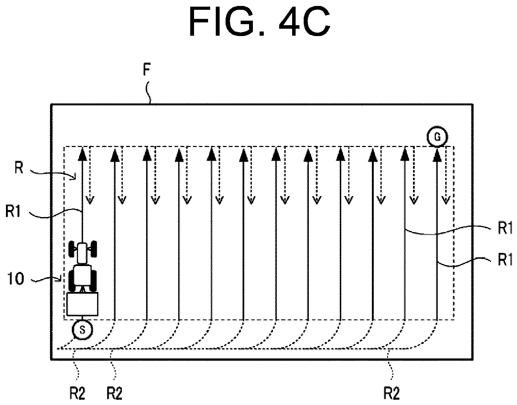

In the example shown in FIG. 4C, the work vehicle 10, after reaching the end position of the straight route R1, travels rearward toward the start position of the straight route R1. For example, when the human operator (e.g., a driver), after reaching the end position of the straight route R1 and pausing, instructs for a rearward traveling (e.g., puts a shift lever in the "rearward (R)"), the work vehicle 10 travels automatically rearward from the end position to the start position of the straight route R1. Thus, along the same straight route R1, the work vehicle 10 travels forward and then rearward. The work vehicle 10, after reaching the start position of the straight route R1, makes the turn traveling along the turn route R2, in the rear, up to the next straight route R1, based on the manual operation by the human operator. For example, the work vehicle 10 turns rearward from the start position of the straight route R1, and then enters the next straight route R1 while turning forward. The turning method in FIG. 4C has an advantage of a narrower turning range.

At the operation terminal 20, the human operator can set the turning method of the work vehicle 10 when generating the target route R for the field F (see FIG. 4A to FIG. 4C). The operation terminal 20 transfers, to the work vehicle 10, the target route R's data associated with information on the turning method, and the work vehicle 10 receives the data from the operation terminal 20, and executes the automatic and manual traveling processes in accordance with the target route R and the turning method. Specific configurations for realizing the automatic traveling process and manual traveling process are described below.

### [Work Vehicle 10]

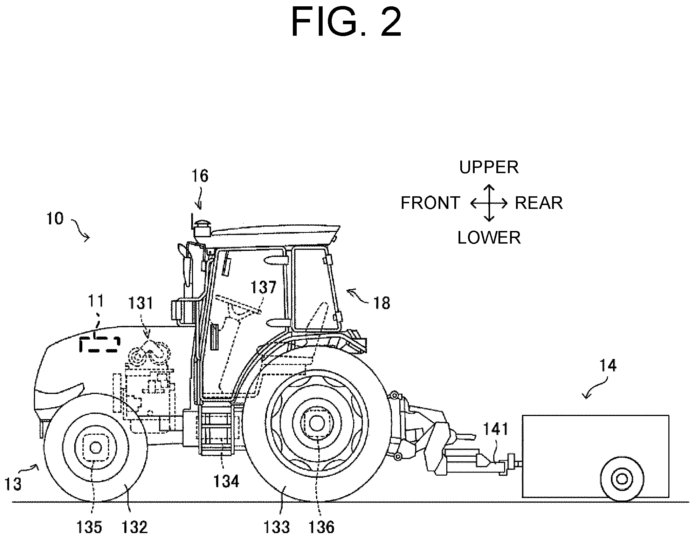

As shown in FIG. 1 and FIG. 2, the work vehicle 10 has a vehicle controller 11, a storage 12, a traveling driver 13, a work instrument 14, a communicator 15, a positioner 16, and the like. The vehicle controller 11 is electrically connected to the storage 12, the traveling driver 13, the work instrument 14, the positioner 16, and the like. Note that the vehicle controller 11 and the positioner 16 may be capable of executing a wireless communication.

The communicator 15 is a communication interface that connects the work vehicle 10 to the communication network N1 by wire or wirelessly, thereby to execute, via the communication network N1, a data communication, which accords to a predetermined communication protocol, with external devices such as the operation terminal 20.

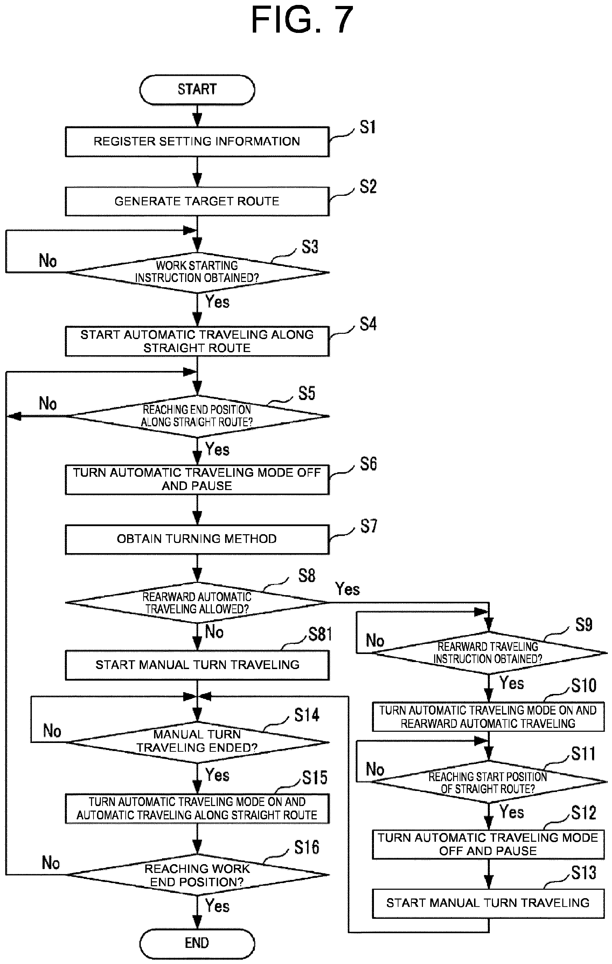

The storage 12 is a non-volatile storage such as a hard disk drive (HDD) or a solid state drive (SSD) that stores various types of information. The storage 12 stores control programs such as an automatic traveling program for causing the vehicle controller 11 to execute the automatic traveling process to be described below (see FIG. 7). For example, the automatic traveling program is recorded in a non-transitory manner in a computer-readable recording medium such as a CD or a DVD, and is read by a predetermined reader (not illustrated) and is stored in the storage 12. The above automatic traveling program may be downloaded from a server (not illustrated) to the work vehicle 10 via the communication network N1 and stored in the storage 12. Further, in the storage 12, the data of the target route R which is generated in the operation terminal 20 is stored.

The traveling driver 13 is a driver that causes the work vehicle 10 to travel. As shown in FIG. 2, the traveling driver 13 includes an engine 131, front wheels 132, rear wheels 133, a transmission 134, a front axle 135, a rear axle 136, a steering wheel 137 and the like. Note that the front wheel 132 and the rear wheel 133 are each provided on the left and right sides of the work vehicle 10. Moreover, the traveling driver 13 is not limited to of the wheel type including the front wheel 132 and the rear wheel 133 but may also be of a crawler type including crawlers provided on the left and right sides of the work vehicle 10.

The engine 131 is a drive source such as a diesel engine or a gasoline engine driven by fuel supplied to a fuel tank, not shown. The traveling driver 13, together with the engine 131 or instead of the engine 131, may include an electric motor as a drive source. Note that, to the engine 131, a generator, not shown, is connected, and the generator supplies power to electric components such as the vehicle controller 11 and batteries provided in the work vehicle 10. Note that the battery is charged by the power supplied from the generator. Then, the electric components such as the vehicle controller 11 and the positioner 16 provided on the work vehicle 10 can be driven by the electric power supplied from the battery even after the engine 131 is stopped.

A driving force of the engine 131 is transmitted to the front wheels 132 through the transmission 134 and the front axle 135 and is transmitted to the rear wheels 133 via the transmission 134 and the rear axle 136. Moreover, the driving force of the engine 131 is transmitted also to the work instrument 14 via a power take off shaft 141 (hereinafter, "PTO shaft 141"). When the work vehicle 10 performs the automatic traveling, the traveling driver 13 performs the traveling operation according to the commands of the vehicle controller 11.

The work instrument 14 is, for example, a cultivator, a seeder, a mower, a plow, a fertilizer applicator or the like, which can be removably mounted to the work vehicle 10. As a result, the work vehicle 10 can perform various works by using each of the work instruments 14. The work instrument 14 may also be a work instrument that allows the assistant worker to board the work instrument 14 and perform a predetermined manual operation on the work instrument 14. For example, when the work instrument 14 is a harvester, the assistant worker, on the work instrument 14, manually harvests the harvest that the work instrument 14 digs up from the soil. FIG. 2 schematically shows the work instrument 14, omitting details thereof.

In the work vehicle 10, the work instrument 14 may be supported, with a raising/lowering mechanism (not shown), in a manner to be raised and lowered. In this case, controlling the raising/lowering mechanism, the vehicle controller 11 raises and lowers the work instrument 14. For example, the vehicle controller 11, when the work vehicle 10 travels along a work route (straight route R1) in the field F, lowers the work instrument 14, and when the work vehicle 10 travels on a non-work route (turn route R2, headland area) raises the work instrument 14.

Also, the work instrument 14 may be a towed work instrument that is towed by the work vehicle 10 for movement. For example, the work instrument 14 may be connected to the work vehicle 10 via a rotary shaft that can rotate in the horizontal direction.

When obtaining a work starting instruction, the vehicle controller 11 outputs a start work command to the work instrument 14. For example, when the human operator performs an operation for the work starting instruction at the operation terminal 20, the vehicle controller 11 obtains the work starting instruction. When having obtained the work starting instruction, the vehicle controller 11 starts driving the PTO shaft 141 thereby to start the work of the work instrument 14. When obtaining a stop work instruction, the vehicle controller 11 outputs a stop work command to the work instrument 14. For example, when the human operator performs an operation for a stop instruction at the operation terminal 20, the vehicle controller 11 obtains the stop instruction. When having obtained the stop work instruction, the vehicle controller 11 stops driving the PTO shaft 141 thereby to stop the work of the work instrument 14. The human operator can also make a setting such that when the work vehicle 10 reaches the end position of each straight route R1, the work of the work instrument 14 is not stopped (maintain driving of the PTO shaft 141) (details to be described below). In this case, the vehicle controller 11 can obtain the work starting instruction when the work vehicle 10 reaches the end position of each straight route R1, and can also obtain the stop instruction when the work vehicle 10 reaches the end position of each straight route R1.

The steering wheel 137 is an operator unit operated by the human operator or the vehicle controller 11. For example, with a hydraulic power steering mechanism (not shown) or the like, the traveling driver 13 changes an angle of the front wheels 132 in response to the steering wheel 137's operation by the vehicle controller 11, thereby to change an advancing direction of the work vehicle 10. For example, the human operator boards the work vehicle 10 and operates the steering wheel 137 thereby to cause the work vehicle 10 to manually travel along the turn route R2. The human operator may manually cause the work vehicle 10 to travel along the turn route R2 by operating a control tool (e.g., remote control) beside the work vehicle 10.

In addition to the steering wheel 137, the traveling driver 13 includes a shift lever, an accelerator, a brake and the like, not shown, operated by the vehicle controller 11. Then, the traveling driver 13 switches a gear of the transmission 134 to a forward gear, a backward gear or the like in accordance with the shift lever's operation by the vehicle controller 11, and switches a travel mode of the work vehicle 10 to forward, backward or the like. Moreover, the vehicle controller 11 operates the accelerator thereby to control the speed of the engine 131. In addition, operating the brake, the vehicle controller 11 brakes revolutions of the front wheels 132 and the rear wheels 133 with an electromagnetic brake.

The positioner 16 is a communicator including a positioning controller 161, a storage 162, a communicator 163, a positioning antenna 164 and the like. For example, the positioner 16 is provided above a cabin 18 on which the human operator boards, as shown in FIG. 2. Moreover, an installation location of the positioner 16 is not limited to the cabin 18. Furthermore, the positioning controller 161, the storage 162, the communicator 163, and the positioning antenna 164 of the positioner 16 may be disposed at different positions in a distributed manner in the work vehicle 10. Note that the battery is connected to the positioner 16 as described above, and the positioner 16 can operate even while the engine 131 is stopped. Moreover, a cell phone terminal, a smart phone, a tablet terminal or the like may be substituted for the positioner 16.

The positioning controller 161 is a computer system including one or a plurality of processors and a storage memory such as a non-volatile memory and a RAM. The storage 162 is a non-volatile memory or the like that stores a program for causing the positioning controller 161 to execute the positioning process as well as data such as positioning information and movement information. For example, the above program is non-transiently recorded in a computer-readable recording medium such as a CD or a DVD, and is read by a predetermined reader (not shown) thereby to be stored in the storage 162. Note that the program may be downloaded from a server (not shown) to the positioner 16 via the communication network N1 and stored in the storage 162.

The communicator 163 is a communication interface for connecting the positioner 16 to the communication network N1 by wire or wirelessly and for executing, via the communication network N1, a data communication, which accords to a predetermined communication protocol, with an external device such as a base station. The positioning antenna 164 is an antenna which receives radio waves (GNSS signals) transmitted from a satellite.

The positioning controller 161 calculates the current position of the work vehicle 10 on the basis of the GNSS signals that the positioning antenna 164 receives from the satellite. For example, in a case where the work vehicle 10 automatically travels in the field F, when the positioning antenna 164 receives radio waves (transmission time, orbital information, and the like) transmitted from each of a plurality of satellites, the positioning controller 161 calculates a distance between the positioning antenna 164 and each satellite, and calculates the current position (latitude and longitude) of the work vehicle 10 on the basis of the calculated distance. Alternatively, the positioning controller 161 may perform positioning by a real-time kinematic method (RTK-GPS positioning method (RTK method)) which calculates the current position of the work vehicle 10 using correction information that corresponds to the base station (reference station) near the work vehicle 10. As described above, the work vehicle 10 performs the automatic travel by using the RTK-method based positioning information. Note that the current position of the work vehicle 10 may be the same as the positioning position (the position of the positioning antenna 164, for example) or it may be a position deviated from the positioning position.

The vehicle controller 11 has control devices such as a CPU, a ROM, and a RAM. The CPU is a processor that executes various types of arithmetic processes. The ROM is a non-volatile storage in which control programs, such as a BIOS and an OS for causing the CPU to execute the various types of arithmetic processing, are stored in advance. The RAM is a volatile or non-volatile storage that stores various types of information and is used as a transient storage memory (work area) for the various types of processes to be executed by the CPU. Further, the vehicle controller 11 causes the CPU to execute the various types of control programs stored in advance in the ROM or the storage 12, thereby to control the work vehicle 10.

By the way, when the work vehicle 10 is equipped with the large work instrument 14, or the work instrument 14 for harvesting with the assistant worker on board, the overall size of the work vehicle 10 (overall length, width, etc.) increases, making it difficult to cause the work vehicle 10 to make the turn traveling. Therefore, in the conventional technology in which the work vehicle 10 is caused to automatically travel along the straight route R1 and the turn route R2 according to the pre-generated target route R, it is difficult to efficiently travel along the target route R, especially for the work vehicle 10 equipped with the work instrument 14 that enlarges the overall size of the work vehicle 10, resulting in a decrease in work efficiency. In contrast, the automatic traveling system 1 according to the present embodiment can improve the work efficiency in the work vehicle 10 equipped with the work instrument 14, as shown below.

Specifically, as shown in FIG. 1, the vehicle controller 11 includes various processors, such as a traveling processor 111 and a switching processor 112. Note that the vehicle controller 11 functions as the various processors, with the CPU executing various types of processes that accord to the automatic traveling program. Further, a part or all of the processors may be configured by electronic circuits. Note that the automatic traveling program may be a program that causes a plurality of processors to function as the processors.

The traveling processor 111 controls travelling of the work vehicle 10. Specifically, the traveling processor 111 causes the work vehicle 10 to perform the automatic traveling on the basis of position information indicating the work vehicle 10's current position which is measured and positioned by the positioning controller 161. For example, if the above positioning state can be measured and positioned by the RTK and the human operator presses the start button on an operation screen (not shown) of the operation terminal 20, the operation terminal 20 outputs a work starting instruction to the work vehicle 10. Obtaining the work starting instruction from the operation terminal 20, the traveling processor 111 of the work vehicle 10 starts the automatic traveling of the work vehicle 10 on the basis of the position information indicating the work vehicle 10's current position which is measured and positioned by the positioning controller 161. As a result, the work vehicle 10, while automatically traveling along each straight route R1 in accordance with the target route R, performs the work by the work instrument 14. The target route R is generated, for example, by the operation terminal 20. Obtaining the data of the target route R from the operation terminal 20, the work vehicle 10 automatically travels in the field F according to the target route R (See FIG. 3).

The switching processor 112 switches the traveling mode of the work vehicle 10. Specifically, the switching processor 112 switches between the automatic traveling mode in which the work vehicle 10 is caused to automatically travel according to the target route R, and the manual traveling mode in which the work vehicle 10 is caused to manually travel based on the manual operation by the human operator. The switching processor 112 may be so configured as to set to the automatic traveling mode by turning the automatic traveling mode on, and to set to the manual traveling mode by turning the automatic traveling mode off. Herein, the target route R includes information on the turning method of the work vehicle 10. For example, the target route R includes information on (1) a first turning method where the work vehicle 10, after reaching the end position of the straight route R1, travels automatically rearward up to the start position of the straight route R1, and after reaching the start position of the straight route R1, is manually turned, in the rear of the start position, up to the next straight route R1 based on the manual operation by the human operator (see FIG. 4C), or (2) a second turning method where the work vehicle 10, after reaching the end position of the straight route R1, is manually turned, in the front, up to the next straight route R1 based on the manual operation by the human operator (see FIG. 4A and FIG. 4B).

Obtaining the information on the first turning method (see FIG. 4C) associated with the target route R, the switching processor 112 turns off the automatic traveling mode when the work vehicle 10 reaches the end position of the straight route R1. This causes the work vehicle 10 to pause at the end position of the straight route R1. Thereafter, when the human operator performs a rearward traveling instruction operation (e.g., putting the shift lever in "rearward (R)"), the switching processor 112 turns on the automatic traveling mode. With this, the traveling processor 111 causes the work vehicle 10 to automatically travel rearward from the end position to the start position of the straight route R1. Thereafter, when the work vehicle 10 reaches the start position of the straight route R1, the switching processor 112 turns off the automatic traveling mode. With this, the work vehicle 10 pauses at the start position of the straight route R1. Then, the traveling processor 111 receives the manual operation by the human operator thereby to cause the work vehicle 10 to make the turn traveling, in the rear, up to the next straight route R1. When the work vehicle 10 reaches the start position of the next straight route R1, the switching processor 112 turns on the automatic traveling mode. Then, work vehicle 10 performs the work while automatically traveling along the next straight route R1.

In contrast, obtaining the information on the second turning method (see FIG. 4A and FIG. 4B) associated with the target route R, the switching processor 112 turns off the automatic traveling mode (manual traveling mode on) when the work vehicle 10 reaches the end position of the straight route R1. This causes the work vehicle 10 to pause at the end position of the straight route R1. Then, traveling processor 111 receives the manual operation by the human operator, and causes the work vehicle 10 to make the turn traveling, in the front, up to the next straight route R1. When the work vehicle 10 reaches the start position of the next straight route R1, the switching processor 112 turns on the automatic traveling mode (manual traveling mode off). Then, work vehicle 10 performs the work while automatically traveling along the next straight route R1.

Thus, the vehicle controller 11, based on the target route R and the turning method, causes the work vehicle 10 to automatically travel along the straight route R1, pauses the work vehicle 10 at the ending of the automatic traveling along the straight route R1, and causes the work vehicle 10 to perform any of a forward turn traveling and a rearward turn traveling traveling rearward along the straight route R1. In addition, the vehicle controller 11, based on the target route R and the turning method, causes the work vehicle 10 to automatically travel along the straight route R1, pauses the work vehicle 10 at the end of the automatic traveling along the straight route R1, and causes the work vehicle 10 to perform any of the manual traveling (turn traveling) and the automatic traveling (traveling rearward along the straight route R1). As another embodiment; when the work vehicle 10 travels rearward along the straight route R1 (see FIG. 4C), the vehicle controller 11 may manually cause the work vehicle 10 to travel based on the manual operation by the human operator.

### [Operation Terminal 20]

As illustrated in FIG. 1, the operation terminal 20 is an information processor that includes an operation controller 21, a storage 22, an operation display 23, a communicator 24, etc. It is also possible the operation terminal 20 is configured with a portable terminal such as a tablet terminal or a smartphone.

The communicator 24 is a communication interface that connects the operation terminal 20 to the communication network N1 by wire or wirelessly, thereby to execute, via the communication network N1, a data communication, which accords to a predetermined communication protocol, with one or more external devices such as the work vehicle 10.

The operation display 23 is a user interface that includes a display, such as a liquid crystal display or an organic EL display that displays various types of information, and an operator unit, such as a touch screen, mouse, or keyboard that receives operations. On an operation screen displayed on the above display, the human operator can operate the above operator unit thereby to register various types of information (work vehicle information, field information, work information, or the like to be described below). Further, the human operator can operate the above operator unit, making it possible to provide an automatic traveling instruction directed to the work vehicle 10. Furthermore, at a location distant from the work vehicle 10, and by a traveling trajectory displayed on the operation terminal 20, the human operator can grasp the traveling state of the work vehicle 10 that automatically travels in the field F along the target route R.

The storage 22 is a non-volatile storage, such as an HDD or an SSD, storing various types of information. The storage 22 stores control programs such as an automatic traveling program for causing the operation controller 21 to execute an automatic traveling process to be described below (see FIG. 7). For example, the automatic traveling program is non-transiently recorded in a computer-readable recording medium such as a CD and a DVD, is read by a predetermined reader (not shown) included in the operation terminal 20, and is stored in the storage 22. Note that the automatic traveling program may be downloaded from a server (not illustrated) via the communication network N1 to the operation terminal 20 and stored in the storage 22. The storage 22 may also store the work information transmitted from the work vehicle 10.

In addition, a dedicated application for causing the work vehicle 10 to automatically travel is installed in the storage 22. The operation controller 21 activates the above dedicated application thereby to execute the setting process of various information about the work vehicle 10, the generating process of the target route R for the work vehicle 10, and the automatic traveling instruction to the work vehicle 10.

The operation controller 21 has control devices such as a CPU, a ROM, and a RAM. The CPU is a processor that executes various types of arithmetic processes. The ROM is a non-volatile storage in which control programs, such as a BIOS and an OS for causing the CPU to execute the various types of arithmetic processing, are stored in advance. The RAM is a volatile or non-volatile storage that stores various types of information and is used as a transient storage memory (work area) for the various types of processes to be executed by the CPU. Further, the operation controller 21 causes the above CPU to execute the various types of control programs stored in advance in the above ROM or the storage 22, thereby to control the operation terminal 20.

As shown in FIG. 1, the operation controller 21 includes various processors such as a vehicle setting processor 211, a field setting processor 212, a work setting processor 213, a route generating processor 214, a receiving processor 215, and an output processor 216. Further, with the CPU, the operation controller 21 executes various processes that accord to the automatic traveling program, thereby to function as the various processors. Further, a part or all of the processors may be configured by electronic circuits. Note that the automatic traveling program may be a program that causes a plurality of processors to function as the processors.

The vehicle setting processor 211 sets information about the work vehicle 10 (hereinafter referred to as "work vehicle information"). With the human operator executing, at the operation terminal 20, an operation of registering information such as the model of the work vehicle 10, the location of the positioning antenna 164 mounted on the work vehicle 10, the type of the work instrument 14, the size and shape of the work instrument 14, and the work instrument 14's position relative to the work vehicle 10, the vehicle setting processor 211 sets the above information.

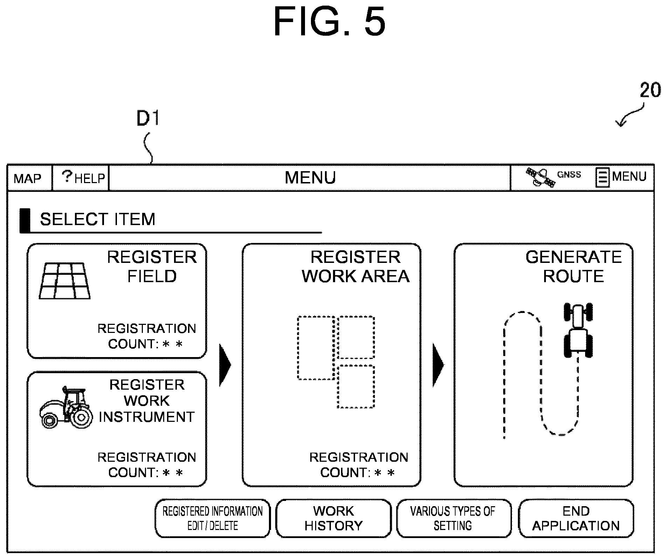

For example, the human operator selects "Work Instrument Registration" on a menu screen D1 shown in FIG. 5, thereby to register the above work vehicle information. On the operation screen (not shown), the human operator registers each of the above pieces of information on the work instrument 14.

The field setting processor 212 sets the information about the field F (hereinafter referred to as "field information"). The field setting processor 212 executes, at the operation terminal 20, an operation to register the information such as the position and shape of the field F, the work start position S at which the work is started and the work end position G at which the work is ended, and a work direction, thereby to set the above information.

Note that the work direction means a direction in which the work vehicle 10 is caused to travel while performing the work with the work instrument 14 in the area, which is the field F's area excluding a headland, a non-cultivated land and the like.

The information on the position and shape of the field F can be obtained automatically, for example, by the human operator boarding the work vehicle 10 and driving one round of the field F along the outer periphery of the field F thereby to record the transition of the position information of the positioning antenna 164. Further, the position and shape of the field F can also be obtained on the basis of a polygon obtained by the human operator operating the operation terminal 20 in a state where a map is displayed on the operation terminal 20 thereby to designate a plurality of points on the map. The area specified by the obtained position and shape of the field F is the area where the work vehicle 10 can be caused to travel (travel area).

The work setting processor 213 sets information on how the work is specifically performed (hereinafter referred to as "work information"). The work setting processor 213 is configured to enable setting, as the work information, whether or not the work vehicle 10 (unmanned tractor) and the manned work vehicle 10 do a cooperative work, the number of skips, which is the number of work routes (straight routes R1) to be skipped when the work vehicle 10 turns in the headland, the width of the headland, the width of the non-cultivated land, etc.

Based on setting information, the route generating processor 214 generates the target route R, which is a route where the work vehicle 10 is caused to automatically travel. The target route R of the present embodiment includes a plurality of work routes (straight routes R1) along which the work instrument 14 performs the work (see FIG. 3). That is, the route generating processor 214 generates the target route R which includes a plurality of straight routes R1 and on which the work vehicle 10 is caused to automatically travel from the start position to the end position of each straight route R1. The route generating processor 214 generates the target route R of the work vehicle 10 based on each setting information set at the vehicle setting processor 211, the field setting processor 212, and the work setting processor 213. The route generating processor 214 is an example of a generating processor of the present invention.

Specifically, the route generating processor 214 generates the target route R (FIG. 3) based on the work start position S and the work end position G registered in the field setting. The target route R is not limited to the route shown in FIG. 3.

Further, the route generating processor 214 registers the turning method of the work vehicle 10 in association with the target route R. Specifically, when the receiving processor 215 receives the human operator's setting operation, the route generating processor 214 registers the turning method.

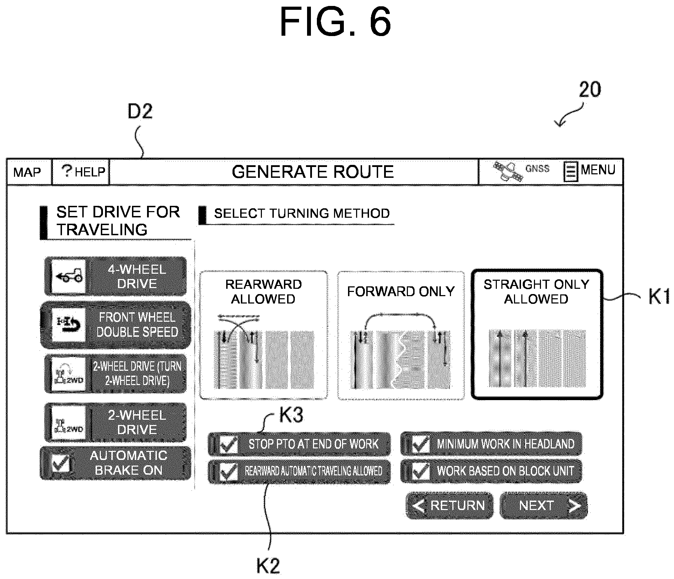

For example, the human operator selects "Route Generation" on a menu screen D1 shown in FIG. 5, thereby to set the turning method. FIG. 6 shows an example of an operation screen D2 (turning method setting screen) for registering information on the turning method of the work vehicle 10. The operation screen D2 includes a plurality of selection buttons for selecting the traveling mode of the automatic traveling. Here, the traveling mode (selection button K1) that allows the automatic traveling for straight traveling only is selected.

The receiving processor 215, when receiving the selection operation of the selection button K1, causes the operation screen D2 to display a set column K2 that sets whether or not to allow "the work vehicle 10, after reaching the end position of the straight route R1, to automatic travel rearward up to the start position of the straight route R1 (rearward automatic traveling)". As shown in FIG. 6, the receiving processor 215 may cause the set column K2 to display, as an initial state (default), a state of allowing the rearward automatic traveling. In this case, the human operator unchecks the set column K2 when the rearward automatic traveling is not allowed.

Receiving the selection operation of the selection button K1, the receiving processor 215 causes the operation screen D2 to display a set column K3 that sets whether or not to allow "stop driving the PTO shaft 141 when the work vehicle 10 reaches the end position of the straight route R1". When the PTO shaft 141 stops driving, the work (driving) of the work instrument 14 stops. As shown in FIG. 6, the receiving processor 215 may cause the set column K3 to display, as an initial state (default), a state of allowing the PTO shaft 141 to stop. In this case, the human operator can uncheck the set column K3 when wishing to allow the assistant worker to continue working without stopping the driving of the PTO shaft 141 even if the work vehicle 10 should stop the automatic traveling, for example. This allows, for example, the assistant worker to continue working (e.g., harvesting) while the work vehicle 10 is automatically traveling rearward after pausing at the end position of the straight route R1. The assistant worker can also serve as the driver of the work vehicle 10.

Thus, the receiving processor 215 can receive the setting operation (a third setting operation of the present invention) to stop the operation of the work instrument 14 after the work vehicle 10 reaches the end position of the straight route R1. The receiving processor 215 is an example of the receiving processor of the present invention.

The route generating processor 214 registers the information on the turning method set by the set columns K2 and K3, in association with the target route R. For example, when the human operator allows the rearward automatic traveling (set column K2) (the first setting operation of the present invention), the route generating processor 214 registers the information of "the first turning method where the work vehicle 10, after reaching the end position of the straight route R1, travels automatically rearward up to the start position of the straight route R1, and after reaching the start position of the straight route R1, is manually turned, in the rear of the start position, up to the next straight route R1 based on the manual operation by the human operator (see FIG. 4C)" in association with the target route R.

When the human operator does not allow the rearward automatic traveling (set column K2) (the second setting operation of the present invention), the route generating processor 214 registers the information of "the second turning method where the work vehicle 10, after reaching the end position of the straight route R1, is manually turned, in the front, up to the next straight route R1 based on the manual operation by the human operator (see FIG. 4A and FIG. 4B)" in association with the target route R.

To the work vehicle 10, the output processor 216 outputs the target route R's data that is generated by the route generating processor 214 and includes the information on the turning method.

Based on the human operator's operation, the output processor 216 outputs the work starting instruction and work ending instruction to the work vehicle 10. For example, receiving an instruction operation to start working (work starting instruction operation) from the human operator, the output processor 216 outputs the work starting instruction to the work vehicle 10. Obtaining the work starting instruction from the operation terminal 20, the vehicle controller 11 of the work vehicle 10 starts the automatic traveling and the work of the work vehicle 10. Also, for example, receiving, from the human operator, an instruction operation to stop the work of the work vehicle 10 that is traveling automatically (work stopping instruction operation), etc., the output processor 216 outputs the work stopping instruction to the work vehicle 10.
Obtaining the work stopping instruction from the operation terminal 20, the vehicle controller 11 of the work vehicle 10 stops the automatic traveling and the work of the work vehicle 10.

Receiving the target route R's data transferred from the operation terminal 20, the work vehicle 10 stores the data in the storage 12. Here, the work vehicle 10 is so configured as to be able to perform the automatic traveling in a case where the current position is in the field F and as to be unable to perform the automatic traveling in a case where the current position is outside the field F. Further, the work vehicle 10 is so configured as to be able to perform the automatic traveling in a case where the current position matches the work start position S, for example.

In a case where the current position matches the work start position S; when the start button is pressed by the human operator on the operation screen thereby to give the work starting instruction, the work vehicle 10, with the vehicle controller 11, starts the work by the work instrument 14. That is, the operation controller 21 allows the automatic traveling of the work vehicle 10 on the condition that the current position matches the work start position S. Note that the condition for allowing the automatic traveling of the work vehicle 10 is not limited to the above.

The vehicle controller 11, based on the information on the target route R, causes the work vehicle 10 to automatically travel from the work start position S to the work end position G according to the straight route R1, and causes the work instrument 14 to work. Further, it is also possible that, with the work vehicle 10 ending the work, the vehicle controller 11 causes the work vehicle 10 to perform the automatic traveling from the work end position G to the entrance of the field F. In a case where the work vehicle 10 is performing the automatic traveling, the operation controller 21, can display, on the operation display 23, the state (position, traveling speed, work situation, etc.) of the work vehicle 10, which state is received from the work vehicle 10.

In addition, when the rearward automatic traveling (set column K2) is allowed (when the first setting operation is received), the vehicle controller 11 causes the work vehicle 10 to automatically travel rearward from the end position to the start position of the straight route R1 (see FIG. 4C). For example, when the rearward automatic traveling (set column K2) is allowed; receiving a predetermined operation by the human operator (rearward traveling instruction operation) after the work vehicle 10 has reached the end position of the straight route R1, the vehicle controller 11 causes the work vehicle 10 to start the automatic traveling rearward.

The vehicle controller 11 cancels the automatic traveling mode when the work vehicle 10 automatically travels rearward along the straight route R1 in the automatic traveling mode thereby to reach the start position of the straight route R1.

After the work vehicle 10 reaches the start position of the straight route R1, the vehicle controller 11 causes the work vehicle 10 to make the turn traveling, in the rear, up to the next straight route R1. For example, the vehicle controller 11, based on the manual operation by the human operator, causes the work vehicle 10 to make the turn traveling (manual traveling) from the start position of the straight route R1 up to the start position of the next straight route R1.

In contrast, when the rearward automatic traveling (set column K2) is not allowed (when the second setting operation is received), the vehicle controller 11 causes the work vehicle 10, after reaching the end position of the straight route R1, to make the turn traveling (manual traveling) up to the next straight route R1 based on the manual operation by the user. The vehicle controller 11 cancels the automatic traveling mode when the work vehicle 10 automatically travels along the straight route R1 forward in the automatic traveling mode thereby to reach the end position of the straight route R1.

Note that, via the communication network N1, the operation terminal 20 may be able to access a website (agricultural support site) of an agricultural support service provided by a server (not shown). In this case, with the operation controller 21 executing a browser program, the operation terminal 20 can function as a terminal for operating the server. Then, the server is equipped with each of the above processors and executes each process.

### [Automatic Traveling Process]

The following is an example of the automatic traveling process performed by the automatic traveling system 1, with reference to FIG. 7. For example, the automatic traveling process is started by the vehicle controller 11 and the operation controller 21 when the human operator starts the operation to set the target route R of the work vehicle 10.

Furthermore, the present invention may be regarded as an invention of an automatic traveling method for executing one or more steps included in the automatic traveling process. Further, it is also possible to appropriately omit one or more steps included in the automatic traveling process described herein. Note that each step in the above automatic traveling process may be executed in a different order as long as the same functional effect is obtained. Furthermore, although a case where the vehicle controller 11 and the operation controller 21 execute each step in the above automatic traveling process is to be described here as an example, an automatic traveling method in which one or more processors execute each step in the automatic traveling process in a distributed manner is also considered as another embodiment.

In step S1, the operation controller 21 of the operation terminal 20 registers various types of setting information. Specifically, the operation controller 21, based on the human operator's setting operation, sets and registers the information on the work vehicle 10 (work vehicle information), information on the field F (field information), and information on the work (work information). The operation controller 21 also sets and registers information such as the work start position S, the work end position G, and the traveling direction.

Then, in step S2, the operation controller 21 generates the target route R based on the various types of setting information. For example, in the field F, the operation controller 21 generates, based on the work start position S and the work end position G which are specified by the human operator, the target route R connecting the work start position S and the work end position G. Here, the operation controller 21 generates the target route R (see FIG. 3) including a plurality of straight routes R1. Also, on the operation screen D2 shown in FIG. 6, the human operator registers information such as the turning method of the work vehicle 10. In association with the target route R, the operation controller 21 registers the information set in the set columns K2 and K3 on the operation screen D2. The operation controller 21 also stores the data of the target route R in the storage 22.

Specifically, the operation controller 21 can receive the first setting operation to set the work vehicle 10, after reaching the end position of the straight route R1, to travel rearward toward the start position of the straight route R1, or the second setting operation to set the work vehicle 10, after reaching the end position of the straight route R1, to make the turn traveling, in the front, up to the next straight route R1.

For example, when the human operator allows the rearward automatic traveling (set column K2) (when receiving the first setting operation), the operation controller 21 registers the information of "the first turning method where the work vehicle 10, after reaching the end position of the straight route R1, travels automatically rearward up to the start position of the straight route R1, and after reaching the start position of the straight route R1, is manually turned, in the rear of the start position, up to the next straight route R1 based on the manual operation by the human operator (see FIG. 4C)" in association with the target route R.

For example, when the human operator does not allow the rearward automatic traveling (set column K2) (when receiving the second setting operation), the operation controller 21 registers the information of "the second turning method where the work vehicle 10, after reaching the end position of the straight route R1, is manually turned, in the front, up to the next straight route R1 based on the manual operation by the human operator (see FIG. 4A and FIG. 4B)" in association with the target route R.

Next, in step S3, the vehicle controller 11 of the work vehicle 10 determines whether or not the work starting instruction has been obtained from the operation terminal 20. For example, the human operator, when pressing the start button on the operation screen of the operation terminal 20, causes the operation terminal 20 to output, to the work vehicle 10, the target route R's data including the turning method. When the vehicle controller 11 obtains the data and the work starting instruction from the operation terminal 20 (S3: Yes), the process proceeds to step S4. The vehicle controller 11 stands by until obtaining the work starting instruction from the operation terminal 20 (S3: No).

Instep S4, the vehicle controller 11 starts the automatic traveling process along the target route R that accords to the above data. Here, the vehicle controller 11 causes the work vehicle 10 to start the straight traveling when the current position of the work vehicle 10 matches the work start position S (the start position of the straight route R1). Also, the vehicle controller 11 drives the PTO shaft 141 thereby to cause the work instrument 14 to start working. As a result, the work vehicle 10 starts the automatic traveling and the work in the straight route R1.

Next, in step S5, the vehicle controller 11 determines whether or not the work vehicle 10 has reached the end position of the straight route R1. When the work vehicle 10 reaches the end position (S5: Yes), the process proceeds to step S6. The work vehicle 10 performs the work while traveling straight ahead until reaching the end position (S5: No).

In step S6, the vehicle controller 11 turns off the automatic traveling mode and pauses. When the human operator, at the time of generating the route, has performed the setting operation (set column K3 in FIG. 6) that allows "stopping the driving of the PTO shaft 141 when the work vehicle 10 reaches the end position of the straight route R1" (when receiving the third setting operation), the vehicle controller 11 turns off the automatic traveling mode and stops the driving of the PTO shaft 141. Stopping the driving of the PTO shaft 141 can stop the work instrument 14, thus making it possible to save a fuel. The human operator, by unchecking a check of the set column K3, can continue the driving of the PTO shaft 141 even with the automatic traveling mode off, thus making it possible for the assistant worker to continue the work.

Next, in step S7, the vehicle controller 11 obtains information on the turning method. Specifically, the vehicle controller 11 obtains the turning method associated with the target route R.

Next, in step S8, the vehicle controller 11 determines whether or not the obtained turning method is the first turning method that allows the rearward automatic traveling, i.e., "the first turning method where the work vehicle 10, after reaching the end position of the straight route R1, travels automatically rearward up to the start position of the straight route R1, and after reaching the start position of the straight route R1, is manually turned, in the rear of the start position, up to the next straight route R1 based on the manual operation by the human operator (see FIG. 4C)". When the obtained turning method is the first turning method (S8: Yes), the process proceeds to step S9.

Meanwhile, when the obtained turning method is not the first turning method (S8: No), that is, when the obtained turning method is "the second turning method where the work vehicle 10, after reaching the end position of the straight route R1, is manually turned, in the front, up to the next straight route R1 based on the manual operation by the human operator (see FIG. 4A and FIG. 4B)", the process proceeds to step S81.

Next, in step S9, the vehicle controller 11 determines whether or not having obtained the rearward traveling instruction. For example, when the human operator has operated the shift lever to be put in "rearward traveling (R)" (rearward traveling instruction operation), the vehicle controller 11 obtains the rearward traveling instruction. When the vehicle controller 11 obtains the rearward traveling instruction (S9: Yes), the process proceeds to step S10. The vehicle controller 11 waits with the work vehicle 10 caused to stop until the rearward traveling instruction is obtained (S9: No).

In step S10, the vehicle controller 11 turns on the automatic traveling mode and causes the work vehicle 10 to automatically travel along the straight route R1 rearward. Specifically, along the straight route R1 along which the work vehicle 10 has already traveled and worked, the vehicle controller 11 causes the work vehicle 10 to automatically travel rearward from the end position to the start position (see FIG. 4C). As described above, making the operation with the shift lever (rearward traveling instruction operation) a condition for the rearward traveling can secure the safety of the assistant worker working in the rear of the work vehicle 10.

Next, in step S11, the vehicle controller 11 determines whether or not the work vehicle 10 has reached the start position of the straight route R1. When the work vehicle 10 reaches the start position (S11: Yes), the process proceeds to step S12. The work vehicle 10 automatically travels rearward until reaching the start position (S11: No).

In step S12, the vehicle controller 11 turns the automatic traveling mode off and pauses.

Next, in step S13, the vehicle controller 11, based on the manual operation by the human operator, starts the turn traveling (manual traveling) to move up to the next straight route R1, based on the manual operation by the human operator (see FIG. 4C). With this, on the rear side of the start position of the straight route R1, the work vehicle 10, based on the manual operation by the human operator, starts making the turn traveling from the start position of the straight route R1 toward the start position of the next straight route R1. This allows the work vehicle 10 to turn efficiently without disturbing the field F because the turning range, without the need of 180-degree turn, can be narrowed. After step S13, the process proceeds to step S14.

Meanwhile, when the turning method obtained in step S7 is not the first turning method (when the turning method is the second turning method (see FIG. 4A and FIG. 4B)); in step S81, the vehicle controller 11, based on the manual operation by the human operator, starts the turn traveling (manual traveling) to move up to the next straight route R1 (see FIG. 4A and FIG. 4B). With this, on the front side of the end position of the straight route R1, the work vehicle 10, based on the manual operation by the human operator, starts making the turn traveling from the end position of the straight route R1 toward the start position of the next straight route R1. After step S81, the process proceeds to step S14.

Next, in step S14, the vehicle controller 11 determines whether or not the manual turn traveling (manual traveling) has ended. For example, when the work vehicle 10 reaches the start position of the next straight route R1, the vehicle controller 11 determines that the turn traveling has ended. When the work vehicle 10 ends the turn traveling (S14: Yes), the process proceeds to step S15. The vehicle controller 11 continues the manual turn traveling of the work vehicle 10 until the turn traveling is ended (S14: No).

In step S15, the vehicle controller 11 turns on the automatic traveling mode and causes the work vehicle 10 to travel along the next straight route R1. Specifically, when the work vehicle 10 reaches the start position of the next straight route R1, the vehicle controller 11 turns the automatic traveling mode on and restarts driving of the PTO shaft 141, thereby causing, along the straight route R1, the work vehicle 10 to start the automatic traveling forward from the start position toward the end position, and causing the work instrument 14 to start working (see FIG. 4A to FIG. 4C).

Next, in step S16, the vehicle controller 11 determines whether or not the work vehicle 10 has reached the work end position G (see FIG. 3). When the work vehicle 10 has reached the work end position G (S16: Yes), the process ends. Meanwhile, when the work vehicle 10 has not reached the work end position G (S16: No), the process returns to step S5, and the processes described above are repeated.

In this way, until the work vehicle 10 reaches the work end position G from starting the automatic traveling at the work start position S, the vehicle controller 11 repeats the automatic traveling and the work that accords to the set target route R (straight route R1) and the turn traveling (manual traveling) that accords to the set turning method. In this way, the automatic traveling system 1 executes the above automatic traveling process.

As described above, the automatic traveling system 1 according to the present embodiment generates the target route R that includes a plurality of straight routes R1, along each of which the work vehicle 10 is caused to automatically travel from the start position to the end position. Also, the automatic traveling system 1 can receive the first setting operation to set the work vehicle 10, after reaching the end position of the first straight route R1, to travel rearward toward the start position of the first straight route R1, or the second setting operation to set the work vehicle 10, after reaching the end position of the first straight route R1, to make the turn traveling, in the front, up to the second straight route R1.

Also, the automatic traveling system 1 can receive the first setting operation to set the work vehicle 10, after reaching the end position of the first straight route R1, to travel rearward up to the start position of the first straight route R1, or the second setting operation to set the work vehicle 10, after reaching the end position of the first straight route R1, to make the turn traveling, in the front, up to the second straight route R1 based on the manual operation by the human operator.

According to the above configuration, it is possible to cause the work vehicle 10 to automatically travel only along the straight route R1. When the work vehicle 10 reaches the end position of the straight route R1, it is possible to turn off the automatic traveling mode thereby to pause the work vehicle 10. Also, the human operator can set the method of turning the work vehicle 10 after reaching the end position of the straight route R1. For example, on the operation screen D2 shown in FIG. 6, the human operator can set (1) the first turning method where the work vehicle 10, after reaching the end position of the straight route R1, travels automatically rearward up to the start position of the straight route R1, and after reaching the start position of the straight route R1, is manually turned, in the rear of the start position, up to the next straight route R1 based on the manual operation by the operator (see FIG. 4C), or (2) the second turning method where the work vehicle 10, after reaching the end position of the straight route R1, is manually turned, in the front, up to the next straight route R1 based on the manual operation by the human operator (see FIG. 4A and FIG. 4B).

This allows the human operator to set the optimal turning method of the work vehicle 10 based on the work instrument information such as the type and size of the work instrument 14, field information such as the shape of the field F, the width of the headland area, and the like. This allows the work vehicle 10 to travel efficiently according to the target route R, thus making it possible to improve work efficiency.

### [Other Embodiments]

The present invention is not limited to the above-described embodiment. Other embodiments of the present invention will be described below.

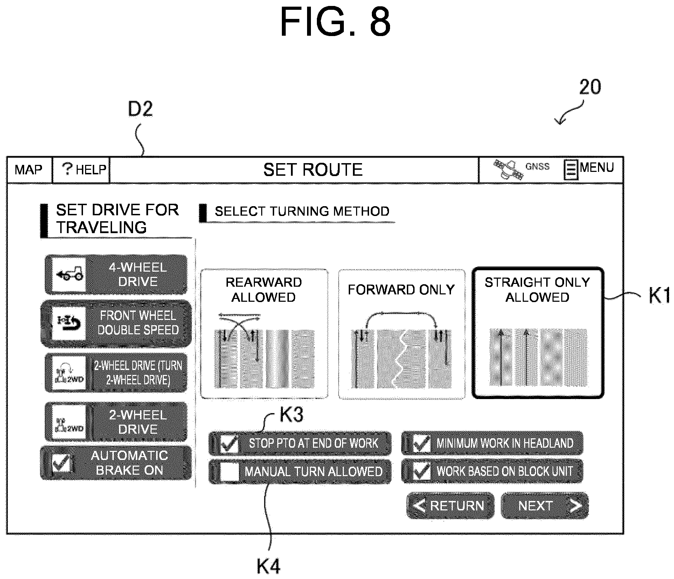

As another embodiment of the operation screen D2 shown in FIG. 6, the receiving processor 215, when receiving the selection operation of the selection button K1 as shown in FIG. 8, may cause the operation screen D2 to display a set column K4 that sets whether or not to allow "the work vehicle 10, after reaching the end position of the straight route R1, to be manually turned (manual turning), in the front, up to the next straight route R1 based on the manual operation by the human operator". As shown in FIG. 8, the receiving processor 215 may cause the set column K4 to display, as an initial state (default), a state of not allowing the manual turning. In this case, the human operator checks the set column K4 so as to allow the manual turning.

When the human operator allows the manual turning (set column K4) (the second setting operation of the present invention), the route generating processor 214 registers the information of "the second turning method where the work vehicle 10, after reaching the end position of the straight route R1, is manually turned, in the front, up to the next straight route R1 based on the manual operation by the human operator (see FIG. 4A and FIG. 4B)" in association with the target route R. When the human operator does not allow the manual turning (set column K4) (the first setting operation of the present invention), the route generating processor 214 registers the information of "the first turning method where the work vehicle 10, after reaching the end position of the straight route R1, automatically travels rearward up to the start position of the straight route R1, and after reaching the start position of the straight route R1, is manually turned, in the rear of the start position, up to the next straight route R1 based on the manual operation by the human operator (see FIG. 4C)" in association with the target route R.

In this way, the receiving processor 215 can receive the first setting operation to set the work vehicle 10, after reaching the end position of the first straight route R1, to travel rearward toward the start position of the first straight route R1, or the second setting operation to set the work vehicle 10, after reaching the end position of the first straight route R1, to make the turn traveling, in the front, up to the second straight route R1.

When the work instrument 14 is a towing type work instrument that is connected to the work vehicle 10 via a rotary shaft that can rotate in the horizontal direction and is towed and moved by the work vehicle 10, the work vehicle 10, when traveling rearward, bends the work instrument 14 around the rotary shaft (a so-called jackknife phenomenon), as the case may be, making it difficult for the work vehicle 10 and the work instrument 14 to linearly move rearward. Therefore, as another embodiment; when the work instrument 14 is the towing type work instrument, the operation controller 21 may be so configured as to disallow the setting of the rearward automatic traveling (receiving of the first setting operation) and to allow the setting of the manual turning (receiving of the second setting operation). This can realize a stable turn traveling. As another embodiment; when the work instrument 14 is the towing type work instrument, the operation controller 21 may be so configured as to allow the setting of the rearward traveling based on the manual operation by the human operator. This allows the human operator to move the work vehicle 10 rearward while checking safety and stability.

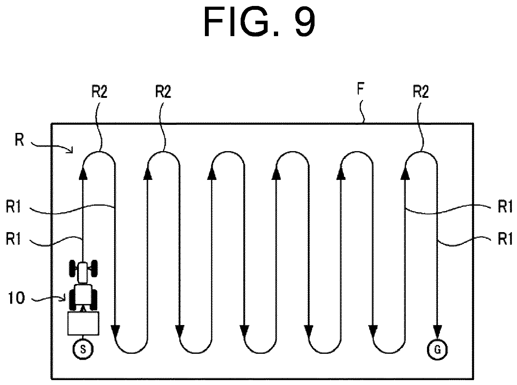

In the above embodiment, it is so configured that the human operator generates the target route R including a plurality of straight routes R1 for the field F, and the work vehicle 10 automatically travels along the straight routes R1 according to the target routes R; in still another embodiment, however, the target route R may include a plurality of turn routes R2 connecting each of the plurality of straight routes R1 and the plurality of straight routes R1, having been preset. For example, when generating the target route R for the field F, the human operator generates the target route R that includes the straight route R1 and the turn route R2. FIG. 9 is an example of the target route R. The operation controller 21 stores the target route R (see FIG. 9) set for the field F.

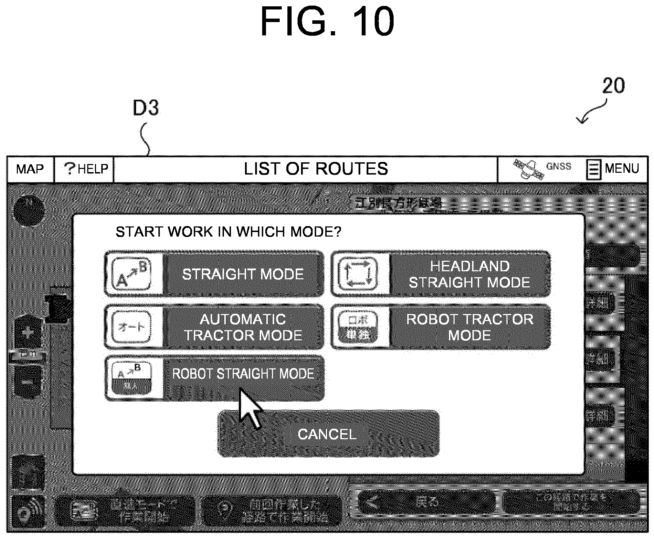

In this case, when causing the work vehicle 10 to start working, the human operator, on the operation screen D3 shown in FIG. 10, selects the traveling mode of the work vehicle 10. Here, when the human operator selects the traveling mode in which the work vehicle 10 is caused to automatically travel only along the straight route R1 (e.g., "robot straight traveling mode"), the operation controller 21 extracts only the straight route R1 among the target routes R (straight route R1 and turn route R2) shown in FIG. 9, and sets the extracted one as the target route R. The work vehicle 10, using information on a plurality of straight routes R1 among the preset target routes R, automatically travels along each of the plurality of straight routes R1. In this way, it is permitted that the automatic traveling system 1, by using part of the preset target routes R (in this case, the straight route R1), causes the work vehicle 10 to execute the automatic traveling. This allows the human operator to effectively use the target route R that has already been registered for the field F, thus making it possible to improve the work efficiency of the human operator's registration operation.

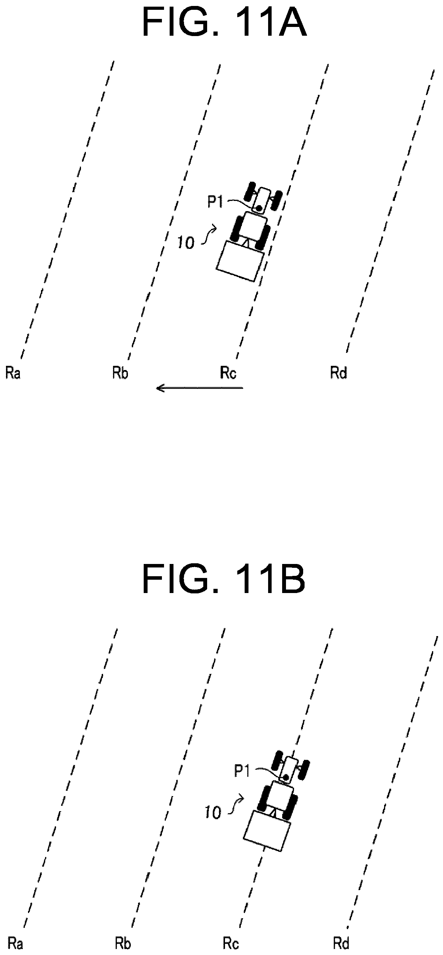

As still another embodiment of the invention, as shown in FIG. 11A and FIG. 11B, the vehicle controller 11 may modify the target route R by moving the entire generated straight routes R1 (Ra to Rd) in a manner to overlap a current position P1 of the work vehicle 10. In this case, as shown in FIG. 11A, the vehicle controller 11 moves the target route R such that moving the entire straight routes Ra to Rd in a direction where the movement amount of the straight routes Ra to Rd is the smallest (to the left in FIG. 11A), thereby causing the target route R to overlap the current position P1. In this case, the work vehicle 10 automatically travels along the straight routes Ra to Rc according to the modified target route R.

Thus, by moving a preset plurality of straight routes R1 based on the current position of the work vehicle 10, the automatic traveling system 1 may modify the target route R. According to this configuration, work efficiency can be improved because there is no need to re-generate a new target route R when the position of the work vehicle 10 deviates from the initial target route R. The process of modifying the target route R can be executed after the work vehicle 10 has started the automatic traveling. The automatic traveling system 1 may also execute a process to modify the target route R by the human operator operating an operation unit (not shown) mounted on the work vehicle 10.

The above embodiment is so configured that the human operator sets the turning method when generating the target route R; in another embodiment, however, the human operator may set the turning method when the work vehicle 10 automatically travels along the straight route R1 and reaches the end position. For example, when detecting that the work vehicle 10 has reached the end position of the straight route R1, the operation terminal 20 displays the operation screen D2 shown in FIG. 6, and receives, from the human operator, an operation to select whether or not to allow the rearward automatic traveling (setting operation of the set column K2). The vehicle controller 11 obtains the setting information from the operation terminal 20 and causes the work vehicle to start the turn traveling. According to this configuration, for example, it is possible to select whether or not to allow the rearward automatic traveling for each straight route R1, so that it is possible that, along the first straight route R1, the work vehicle 10 is manually turned in the front, and along the second straight route R1, the work vehicle 10 is caused to travel rearward and then is manually turned in the rear.

### REFERENCE SIGNS LIST

1 automatic traveling system
10 work vehicle
11 vehicle controller
13 traveling driver
14 work instrument
20 operation terminal
21 operation controller
111 traveling processor
112 switching processor
141 PTO shaft
211 vehicle setting processor
212 field setting processor
213 work setting processor
214 route generating processor (generating processor)
215 receiving processor
216 output processor
D1 menu screen
D2 operation screen
D3 operation screen
F field
K1 selection button
K2 set column
K3 set column
K4 set column
R target route
R1 straight route (first straight route, second straight route)
R2 turn route

## Claims

1. An automatic traveling method for executing operations comprising:
generating a target route that includes a plurality of straight routes, along each of which a work vehicle is caused to automatically travel from a start position to an end position; and
receiving either
a first setting operation to set the work vehicle, after reaching an end position of a first straight route, to travel rearward toward a start position of the first straight route, or
a second setting operation to set the work vehicle, after reaching the end position of the first straight route, to make a turn traveling, in a front, up to a second straight route.

2. The automatic traveling method according to claim 1,
wherein when the first setting operation is received, the work vehicle is caused to automatically travel rearward from the end position to the start position of the first straight route.

3. The automatic traveling method according to claim 2, wherein after the work vehicle reaches the start position of the first straight route, the work vehicle is caused to make the turn traveling, in a rear, up to the second straight route.

4. The automatic traveling method according to 2 or 3,
wherein with the first setting operation received, when a predetermined operation by a user is performed after the work vehicle reaches the end position of the first straight route, the work vehicle is caused to start automatically traveling in the rearward.

5. The automatic traveling method according to any one of claims 2 to 4, wherein when the work vehicle automatically travels rearward along the first straight route in an automatic traveling mode thereby to reach the start point position of the first straight route, the automatic traveling mode is cancelled.

6. The automatic traveling method according to any one of claims 1 to 5, wherein with the second setting operation received, after the work vehicle reaches the end position of the first straight route, the work vehicle makes the turn traveling up to the second straight route based on a manual operation by a user.

7. The automatic traveling method according to any one of claims 1 to 6, wherein when the work vehicle travels automatically forward along the first straight route in an automatic traveling mode thereby to reach the end position of the first straight route, the automatic traveling mode is cancelled.

8. The automatic traveling method according to any one of claims 1 to 7, wherein
the work vehicle includes a work instrument that performs a predetermined work along each of the plurality of the straight routes, and
the work vehicle is capable of receiving a third setting operation to set the work instrument to stop operating after the work vehicle reaches the end position of the first straight route.

9. The automatic traveling method according to any one of claims 1 to 8, wherein
the work vehicle includes a work instrument that performs a predetermined work along each of the plurality of the straight routes, and
when the work instrument is a towed work instrument that moves by being towed by the work vehicle, the work vehicle disallows receiving of the first setting operation and allows receiving of the second setting operation.

10. The automatic traveling method according to any one of claims 1 to 9, wherein
the target routes include a plurality of turn routes for connecting each of the plurality of the straight routes and the plurality of the straight routes, having been preset, and
the work vehicle, using information on the plurality of the straight routes among the target routes, automatically travels along each of the plurality of the straight routes.

11. The automatic traveling method according to any one of claims 1 to 10, wherein the target route is modified by moving the preset plurality of the straight routes based on a current position of the work vehicle.

12. An automatic traveling method for executing operations comprising:
generating a target route that includes a plurality of straight routes, along each of which a work vehicle is caused to automatically travel from a start position to an end position; and
receiving either
a first setting operation to set the work vehicle, after reaching an end position of a first straight route, to automatically travel rearward up to a start position of the first straight route, or
a second setting operation to set the work vehicle, after reaching the end position of the first straight route, to make a turn traveling, in a front, up to a second straight route based on a manual operation by a user.

13. An automatic traveling system comprising:
a generating processor that generates a target route that includes a plurality of straight routes, along each of which a work vehicle is caused to automatically travel from a start position to an end position; and
a receiving processor that is capable of receiving
a first setting operation to set the work vehicle, after reaching an end position of a first straight route, to travel rearward toward a start position of the first straight route, or
a second setting operation to set the work vehicle, after reaching the end position of the first straight route, to make a turn traveling, in a front, up to a second straight route.

14. An automatic traveling program for causing one processor or a plurality of processors to execute operations comprising:
generating a target route that includes a plurality of straight routes, along each of which a work vehicle is caused to automatically travel from a start position to an end position; and
receiving either
a first setting operation to set the work vehicle, after reaching an end position of a first straight route, to travel rearward toward a start position of the first straight route, or
a second setting operation to set the work vehicle, after reaching the end position of the first straight route, to make a turn traveling, in a front, up to a second straight route.
